# EUROPEAN PATENT APPLICATION

(11) **EP 3 107 021 A1**
(43) Date of publication of application: **21.12.2016**
(21) Application number: 15305944.9
(22) Date of filing: 18.06.2015
(51) Int. Cl.: G06F 21/31, G06Q 20/00, H04L 29/06

(54) **ACCESS TO A USER ACCOUNT FROM DIFFERENT CONSECUTIVE LOCATIONS**

(71) Applicant: Orange, 75015 Paris (FR)
(72) Inventor: LE GOFF, Mikael, 29890 Kerlouan (FR)
(74) Representative: Cabinet Plasseraud

(57) **Abstract**

Methods have been proposed against the theft of authentication credentials, but they are not adapted when the user owning the account wants to share his account by giving his authentication credentials while controlling accesses to his account. To address these needs, a first aspect of the invention relates to a method for managing access to a user account, the method comprising creating a new entry in an access register associated with the user account upon detection that it is physically impossible to move from a first to a second locations of the respective accesses within the time difference between a first and a second respective timestamps.

## Description

The present invention relates to the field of access management of a user account. In particular, a method for managing consecutive accesses from different locations through a single user account is disclosed.

The notion of "access to a user account" refers to an access to any type of information, resource or service intended for at least one specific user. For example, the specific user is the owner of the user account, ie an individual for whom the user account has been created.

The term "resource" refers to any type of means available, or potentially available, to a person or a group of person. Social networking, email, remote banking, video-on-demand, car sharing or instant messaging services are examples of such resources. In the present application, the term "resource" and the term "service" are used indistinguishably and can be replaced one by the other.

A user should usually be authenticated to access the user account. In most of the cases, users are authenticated using authentication credentials such as a combination of login and password.

Such methods for accessing a user account were initially designed to allow only one specific user, such as the user owning the account, to access the user account. However, authentication credentials are frequently shared between several individuals. This shared knowledge of authentication credentials can be controlled, when credentials are given by the owner of the user account, but can also be undergone when credentials are stolen.

Methods have been proposed to avoid access to the user account that does not result from the user owning the account. In particular, methods where authentication credentials comprise biometric features of the user owning the account have been proposed. As biometrics features cannot be stolen nor given, only the user owning the account can access the user account.

If such methods are indeed efficient against the theft of authentication credentials, they are not adapted when the user owning the account wants to share his account by giving his authentication credentials while controlling accesses to his account.

To address these needs, a first aspect of the invention relates to a method for managing access to a user account, the method comprising:
- detecting a first access to the user account;
- collecting a first location information and a first time stamp associated to the first access;
- detecting a subsequent second access to the user account;
- collecting a second location information and a second time stamp associated to the second access;
- upon detection that it is physically impossible to move from first to second locations within the time difference between the first and second timestamps creating a new entry in an access register associated with the user account.

Thus, the invention provides a safe method for several users to access the same user account.

Indeed, the detection that it is physically impossible to move from first to second locations within the time difference between the first and second timestamps (hereafter referred to as "displacement test") makes it possible to detect that different users access the same user account. As each of these accesses is logged in the access register, it is possible to monitor the access to the user account by consulting the access register. For example, the user owning the user account can check the access register in order to detect any suspicious access to his user account.

In an embodiment, the new entry comprises location information associated with the first access and location information associated with the second access. Having access to location information make it easier for the one monitoring the account (e.g. user owning the user account) to detect suspicious accesses.

In another embodiment, the new entry is created only if at least one among the first location and the second locations is not already comprised in entries previously stored in the access register. Thus, intelligibility of the access register is improved as only accesses to new locations are detected.

In an embodiment, the method further comprises:
- requesting personal data from the user accessing the user account at the first location and from the user accessing the user account at the second location;
- identifying said users accessing the user account, respectively at the first and at the second location, according to the personal data.

As the user accessing the user account is identified when the displacement test is negative (detection that it is physically impossible to move from first to second locations within the time difference between the first and second timestamps), the relevancy of the access register is improved. Indeed, the access register thus indicates identities of all different users accessing the same user account.

In another embodiment, users accessing the user account are also identified according to at least one element among the first location information, the first time stamp, the second location information and/or the second time stamp. Thus, even if no personal data are indicated in response to the answer, a generic identifier could still be generated using location information and time stamps.

The relationship between the user accessing the user account at the first location and the user accessing the user account at the second location can also be determined according to at least one element among answers of the requests, first location information, the first time stamp, second location information and/or the second time stamp.

In an embodiment, a vouched location is stored in the access register. In this embodiment, the method further comprises:
- requesting personal data from the user accessing the user account at a remote location that is not the vouched location, said remote location being one of the first or second location;
- identify said user accessing the user account at the remote location according to the personal data.

As explained below in the specification, a vouched location is a location where an access to the user account is considered normal. Examples of such vouched location are: the location where the user account has been created, a residence of the owner of the user account, a preference indicated by the owner of the user account, etc.

Each access at a location different than the vouched location, when the displacement test is negative, most likely indicates that an unknown user accessed the user account. Therefore, it is particularly relevant to identify this user in this case, in particular for the owner of the user account.

In another embodiment, the user accessing the user account at the remote location is also identified according to at least one element among the first location information, the first time stamp, the second location information and/or the second time stamp.

In an embodiment, a first user interface is output to an user accessing the user account, and, upon detection that it is physically impossible to move from first to second locations within the time difference between the first and second timestamps, a second user interface is output to the user accessing the user account. Thus, alleged new or unknown users can benefit from an adapted interface.

In another embodiment, authentication credentials are stored in the access register. In this embodiment, the method further comprises:
- receiving an authorization request comprising authentication credentials from a given user;
- upon detection of a match between authentication credentials comprised in the authorization request and stored authentication credentials, authorizing access to the access register to the given user.

Thus, an authorized user can have a quick and precise overview of users using the account. For example, the owner of the user account can monitor accesses to his user account.

In an embodiment, the method further comprises:
- deciding to grant the first and/or second accesses depending on at least one element among access parameters chosen by the authorized user, the first location information, the first time stamp, the second location information and/or the second time stamp.

The use of such parameters makes it possible for the authorized user to adapt the management of accesses to the user account. For example, the owner of the user account can adapt the accessibility of his user account depending on whether he is keen on sharing it.

In another embodiment, the method further comprises:
- counting the number of entries in the access register;
- granting the first and second access if the number of entries is below a predetermined number of entries. Thus, a predetermined number of accesses from alleged new or unknown users is permitted. As explained below, a typical predetermined number can be two or three.

In one embodiment, access parameters comprise the predetermined number of entries. Thus, the authorized user can adapt the possibility for alleged new or unknown users to access the user account.

In another embodiment, access parameters comprise a password, the method further comprises:
- request the user accessing the user account at the first and/or second location, to enter the password to grant the first and/or second access. Thus, the authorized user of the account can avoid unwanted accesses to the account by other users.

In an embodiment, the method further comprises:
- invite the user accessing the user account at the first and/or second location to create a personal user account.

A second aspect of the invention relates to a computer program product recorded on a storage medium and executable by a computer in the form of a software including at least one software module setup to implement the method according to the first aspect of the invention.

A third aspect of the invention relates to a server for managing access to a user account, the server comprising:
- receiving means adapted to perform the following operations:
   - detecting a first access to the user account;
   - collecting a first location information and a first time stamp associated to the first access;
   - detecting a subsequent second access to the user account;
   - collecting a second location information and a second time stamp associated to the second access;
- a memory storing an access register associated with the user account;
- a processor adapted to perform the following operations:
   - upon detection that it is physically impossible to move from first to second locations within the time difference between the first and second timestamps, creating a new entry in the access register.

The present invention is illustrated by way of example, and not by way of limitation, in the figures of the accompanying drawings, in which like reference numerals refer to similar elements and in which:
- Figure 1 represents a system wherein two users access a user account monitored in a server, according to an embodiment of the invention;
- Figure 2 represents a flowchart of the steps of a method according to some embodiments of the invention;
- Figure 3 represents a flowchart of the steps of a method according to some embodiments of the invention;
- Figure 4 represents a flowchart of the steps of a method according to some embodiments of the invention;
- Figure 5 represents a server, according to some embodiments of the invention.

The invention is described below in his non-limitative application of access management to a resource through a user account. Other applications such as access management of any type of information or service available through a user account are readily derivable from the below description.

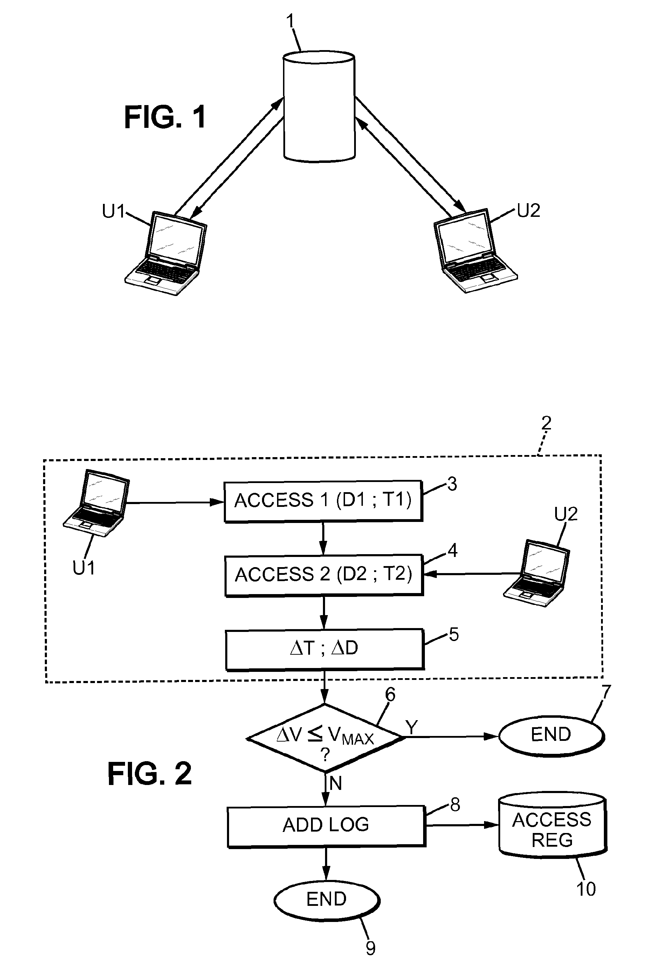

**Figure 1** illustrates a server 1 and two users U1 and U2. U1 and U2 exchange data with the server 1 to access a resource provided by this server.

In figure 1, users are illustrated by personal computers. However, users can access the resource provided by the server 1 by other means such as smartphones, tablets, watches or any object able to exchange data with the server 1. The exchange of data between the server 1 and users U1 and U2 can rely on technologies such as wireless transmissions (4G, Wi-Fi, Lora, etc.), wired transmissions (Ethernet, HDMI, etc.), etc. The resource is accessible via a user account. Thus, in some implementations, users must provide authentication credentials (such as login and password) to access the resource.

A method for managing access to the resource is disclosed below in reference with figures 2, 3 and 4.

In **figure 2****,** a first access to the resource through the user account is detected at a step 3. Moreover, in step 3, a first location information D1 and a first time stamp T1, both associated with the first access, are collected.

In a step 4, a second access to the resource through the user account from user U2 is detected. As for the step 3, a second location information D2 and a second time stamp T2 are collected.

Location information is for example geographical coordinates (e.g. latitude and longitude) and time stamp is for example defined according to the UTC time standard. Location information can also refer to a plurality of locations (e.g. circle).

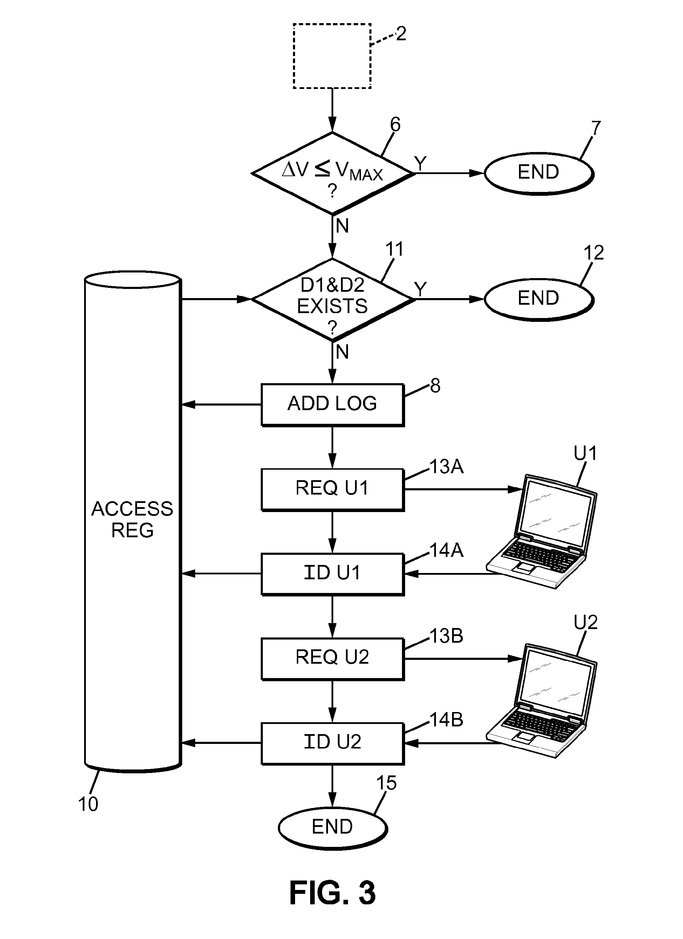

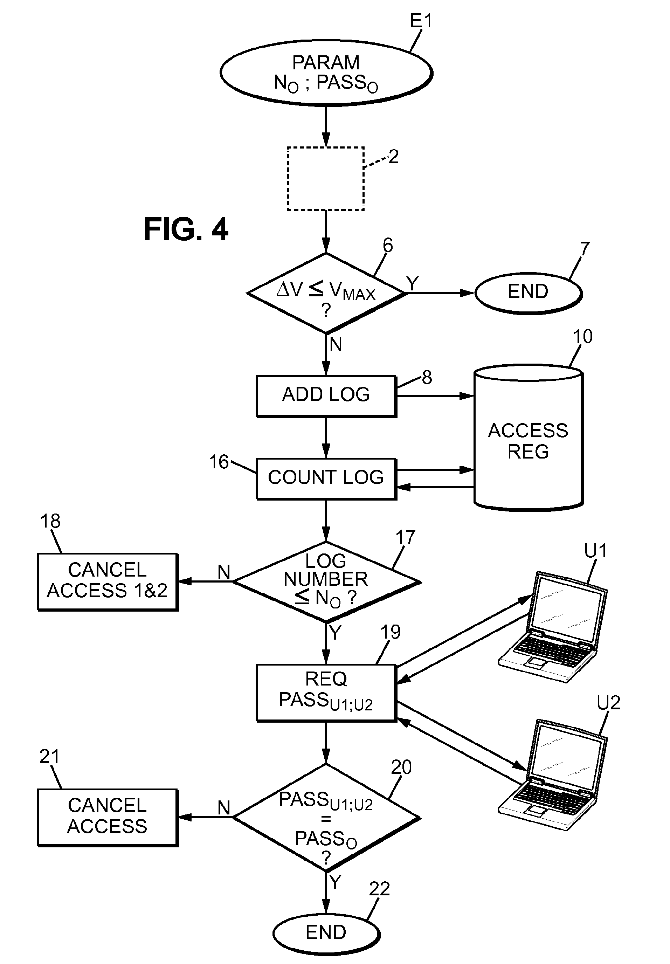

A distance difference ΔD and a time difference ΔT are determined at a step 5. For the sake of clarity of figures 3 and 4, steps 3, 4 and 5 are regrouped in a global step 2, represented by a dotted frame in figures 2, 3 and 4.

In a step 6, a displacement test between the first and second accesses is applied. In particular, a speed ΔV= ΔD/ ΔT is calculated and compared to a threshold V_{MAX}. If ΔV is inferior to the threshold V_{MAX}, the displacement test is positive and it is considered that it is physically possible to move from first to second locations within the time difference between the first and second timestamps.

A typical value for the threshold V_{MAX} is the speed of sound v = 340,29 m.s⁻¹ as it is highly unlikely that a user can travel from D1 to D2 faster than the speed of sound. The lower the threshold is, the most sensitive the displacement test is.

The threshold V_{MAX} can also depend on the location D1 and/or D2. For instance, if it is detected that D1 and/or D2 is located in a remote place such as in mountains, the threshold V_{MAX} can be reduced.

If the speed ΔV is below or equal to the threshold V_{MAX} (positive displacement test), the displacement between the first and the second access is considered normal and the method ends at a step 7.

If, however, the speed ΔV is above the threshold V_{MAX} (negative displacement test), an abnormal displacement is detected. In this case, a new entry in an access register 10 associated with the user account is created in a step 8. Then, the method ends at a step 9. In an embodiment, both first and second accesses are cancelled if the displacement test 6 is negative.

The access register 10 can be stored in the server 1 or in another server. It comprises entries, each entry corresponding to a negative displacement test. The access register can be a mere counter incremented each time a displacement test is negative. As it is described below, it can also be a remote platform available for an authorized user, such as the owner of the user account, to manage the user account. Typically, the owner can have access to the access register when he logs in his user account.

In **figure 3****,** after location information and time stamps have been collected (step 2), the displacement test is applied at step 6, as explained above. In this embodiment, each entry stored in the access register comprises location information associated with first and second accesses relating to this entry.

When the displacement test is negative, a new test is applied at a step 11. Location information associated with entries already stored in the access register are retrieved and compared with the first location information D1 and with the second location information D2.

If both D1 and D2 are already stored in the access register (either on a single entry or on several entries), first and second accesses are considered normal and the method ends at a step 12.

If, however, D1 or D2 is not already stored in the access register, a new entry is created at step 8.

Then, in this case (D1 or D2 not already stored in the access register), a personal data request is sent to user U1 and to user U2, respectively at steps 13A and 13B. Personal data requested can be identification information such as a first name, a last name, an address, a phone number, a mail address, a pseudonym, a relationship with the owner of the user account, etc.

According to answers given by users U1 and U2, D1, T1, D2 and/or T2, an identifier is assigned to users U1 and U2, respectively at steps 14A and 14B. If answers given by users are sufficient, the identifier can be the name of these users or an identifier corresponding to an account associated with the resource. Otherwise, generic identifiers using information such as D1, T1, D2, T2 can be used. For example, for U2, the identifier: "user accessing the resource at T2 in D2" can be retained. Assigned identifiers are then stored in the access register 10.

In an embodiment, hereafter referred to as the "vouched location embodiment", a vouched location is stored in the access register. The vouched location is a location where an access to the resource through the user account is considered normal. Examples of locations where an access to the resource is considered normal are: the location where the user account has been created, a residence of an owner of the user account, locations indicated by the owner of the user account, airports, addresses of the resource provider, locations comprised in entries previously stored in the access register, etc.

In the vouched location embodiment, the method comprises, after the new entry has been created at step 8, a step for requesting personal data from the user accessing the resource at a remote location that is not the vouched location, said remote location being one of the first or second location. Identification of said user accessing the resource at the remote location is then processed according to at least one element among answers of the request, the first location information, the first time stamp, the second location information and/or the second time stamp.

In the method described hereafter in reference with **figure 4****,** an authorized user of the user account can adapt the management of the account to his needs.

A user is defined as an authorized user if he is authenticated as an authorized user by the access register. To do so, authentication credentials are stored in the access register. If a authorization request comprising the correct authentication credentials (ie authentication credentials of the authorization request are similar to stored authentication credentials) is received by the access register, the user is defined as an authorized user. Authentication credentials are typically a combination of identifier/password, biometrics features, etc. Typically, authentication credentials stored in the access register can be chosen by the individual creating the account when creating the account.

Access parameters are chosen by the authorized user in a step E1. These access parameters comprise a predetermined number of entries N_{O} and a password PASS_{O}.

The predetermined number of entries N_{O} corresponds to the maximum number of entries allowable in the access register. As explained hereafter, when a displacement test is negative and the number of entries in the access register is superior to N_{O}, the first and/or the second access are cancelled.

The predetermined number can be chosen by the authorized user. The lower the predetermined number, the most restrictive the access to the resource. Alternatively, the predetermined number can be fixed, by choosing for example 2 or 3.

The password PASS_{O} is chosen by the authorized user and can be asked to users accessing the resource when the displacement test is negative, as explained below.

After location information and time stamps have been collected (step 2), the displacement test is applied at step 6 and, if the displacement test is negative, an entry is created in the access register 10 at step 8.

In a step 16, the number of entries in the access register 10 is counted. Then, a test 17 checks whether the number of entries of the access register is inferior or equal to the predetermined number of entries N_{O}.

If the test is negative (number of entries stored in the access register strictly superior to the predetermined number N_{O}), the first and second accesses are cancelled at a step 18.

In an embodiment, users accessing the resource at the first and second locations first access the resource but these accesses are cancelled thereafter if the test 17 is negative. Between the second access and the cancelling of the first and second accesses, there is no more than five seconds (corresponding to the data treatment for processing the test 17 in server 1).

In another embodiment, the second access is not granted before the result of the test 17. Thus, if the test 17 is negative, the second access is never granted. Alternatively, both first and second accesses are not granted before the result of the test 17.

If the test 17 is positive, a password PASS_{U} can be requested from the first and the second user. The password entered by the first and the second user is then compared to the password PASS_{O} chosen by the authorized user in a test 20.

If the test 20 is negative (wrong password entered by the user), the access for which the user wrongly answered the password is cancelled at a step 21. As explained above for the test 17, the method can allow the access first then cancel it if the test negative or wait for the result of the test 20 before granting the access. If the test 20 is positive, both accesses are definitely granted and the method ends at a step 22.

In the vouched location embodiment, tests 17, 20 and associated steps can be implemented only for the user accessing the resource at the remote location. The user accessing the resource at the vouched location can be relieved from tests 17, 20 and associated steps.

In other embodiments, when the displacement test 6 is negative, a specific interface can be presented to the user accessing the resource at the first location and to the user accessing the resource at the second location. These users can also be invited to create a personal user account to access the resource.

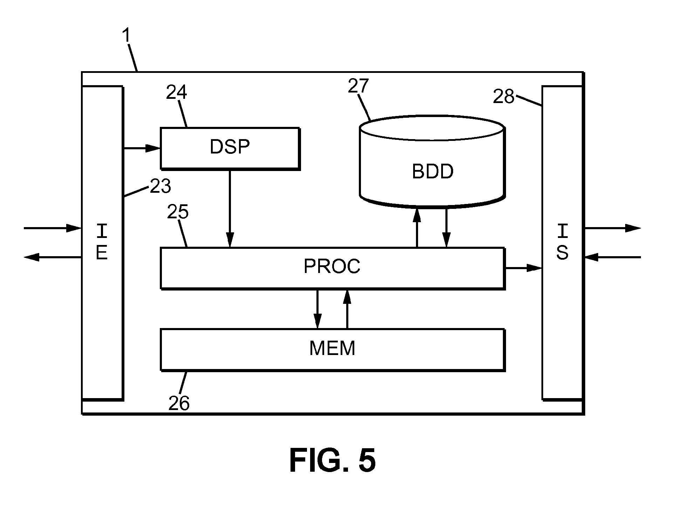

**Figure 5** is a possible embodiment for a server 1 that enables the present invention.

In this embodiment, the server 1 comprise a computer, this computer comprising a hard memory 27 to store program instructions loadable into a volatile memory 26 and adapted to cause circuit 25 to carry out the steps of the present invention when the program instructions are run by the circuit 25.

The memory 27 and the memory 26 may also store data and useful information for carrying the steps of the present invention as described above.

The circuit 25 may be for instance:
- a processor or a processing unit adapted to interpret instructions in a computer language, the processor or the processing unit may comprise, may be associated with or be attached to a memory comprising the instructions, or
- the association of a processor / processing unit and a memory, the processor or the processing unit adapted to interpret instructions in a computer language, the memory comprising these instructions, or
- an electronic card wherein the steps of the invention are described within silicon.

This computer comprises an input interface 23 for the reception of data used for the above method according to the invention, a digital signal processor 24 for modulating/demodulating said data and an output interface 28 for providing a stacked model.

A person skilled in the art will readily appreciate that various parameters disclosed in the description may be modified and that various embodiments disclosed may be combined without departing from the scope of the invention.

In particular, the method according to some embodiments comprises a displacement test based on a speed comparison. Other calculus can be processed to determine whether it is physically possible to move from first to second locations within the time difference between the first and second timestamps. In particular, a list of locations and corresponding maximum travel time can be used.

Moreover, the access management to a user account is described for two users in some embodiments. However, the method according to the invention can easily be implemented for more than two users. In particular, entries can be created each time a displacement test between two accesses is negative. For example, if three accesses are detected, the displacement test (and subsequent steps) can be applied between the first and second accesses and between the second and third accesses.

Several steps following the displacement test have been described according to some embodiments. These steps can be implemented in any order or in any combination.

## Claims

1. Method for managing access to a user account, the method comprising:
- detecting (3) a first access to the user account;
- collecting a first location information (D1) and a first time stamp (T1) associated to the first access;
- detecting (3) a subsequent second access to the user account;
- collecting a second location information (D2) and a second time stamp (T2) associated to the second access;
- upon detection that it is physically impossible to move from first to second locations within the time difference between the first and second timestamps, creating (8) a new entry in an access register associated with the user account.

2. Method according to claim 1, wherein the new entry comprises location information associated with the first access and location information associated with the second access.

3. Method according to claim 2, wherein the new entry is created only if (11) at least one among the first and second locations is not already comprised in entries previously stored in the access register.

4. Method according to any of the preceding claims, further comprising:
- requesting personal data from the user accessing the user account at the first location (13A) and from the user accessing the user account at the second location (13B);
- identifying said users (14A; 14B) accessing the user account, respectively at the first and at the second location, according to the personal data.

5. Method according to claim 4, wherein said users (14A; 14B) accessing the user account are also identified according to at least one element among the first location information, the first time stamp, the second location information and/or the second time stamp.

6. Method according to 1 a 3, wherein a vouched location is stored in the access register,
the method further comprising:
- requesting personal data from the user accessing the user account at a remote location that is not the vouched location, said remote location being one of the first or second location;
- identify said user accessing the user account at the remote location according to the personal data.

7. Method according to claim 6, wherein said user accessing the user account at the remote location is also identified according to at least one element among the first location information, the first time stamp, the second location information and/or the second time stamp.

8. Method according to any of the preceding claims, wherein a first user interface is output to an user accessing the user account, and wherein, upon said detection, a second user interface is output to the user accessing the user account.

9. Method according to any of the preceding claims, wherein authentication credentials are stored in the access register, the method further comprising:
- receiving an authorization request comprising authentication credentials from a given user;
- upon detection of a match between authentication credentials comprised in the authorization request and stored authentication credentials, authorizing access to the access register to the given user.

10. Method according to claim 9, further comprising:
- deciding to grant the first and/or second accesses depending on at least one element among access parameters chosen by the authorized user, the first location information, the first time stamp, the second location information and/or the second time stamp.

11. Method according to any of the preceding claims, further comprising:
- counting (16) the number of entries in the access register;
- granting the first and second accesses if the number of entries is below a predetermined number of entries.

12. Method according to claims 10 and 11, wherein access parameters comprise the predetermined number of entries.

13. Method according to any of the preceding claims, further comprising:
- inviting the user accessing the user account at the first and/or second location to create a personal user account.

14. A computer program product recorded on a storage medium and executable by a computer in the form of a software including at least one software module setup to implement the method according to any of claims 1 to 13.

15. A server for managing access to user account, the server comprising:
- receiving means adapted to perform the following operations:
• detecting a first access to the user account;
• collecting a first location information and a first time stamp associated to the first access;
• detecting a subsequent second access to the user account;
• collecting a second location information and a second time stamp associated to the second access;
- a memory storing an access register associated with the user account;
- a processor adapted to perform the following operations:
• upon detection that it is physically impossible to move from first to second locations within the time difference between the first and second timestamps, creating a new entry in the access register.
